(19) Europäisches Patentamt
European Patent Office
Office européen des brevets

(11) **EP 2 458 400 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(21) Anmeldenummer: **10015062.2**

(22) Anmeldetag: **27.11.2010**

(51) Int Cl.:
*G01S 7/40* *(2006.01)*  *G01S 13/44* *(2006.01)*

(54) **Verfahren zur Richtungspeilung mittels Monopulsbildung**

Method for determining direction by means of monopulse radar

Procédé de relèvement de direction par la formation de mono-impulsion

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.05.2012 Patentblatt 2012/22**

(73) Patentinhaber: **EADS Deutschland GmbH**
**85521 Ottobrunn (DE)**

(72) Erfinder: **Schneider, Robert, Dr.**
**88483 Burgrieden (DE)**

(74) Vertreter: **Meel, Thomas**
**EADS Deutschland GmbH**
**Patentabteilung, LAIP1**
**88039 Friedrichshafen (DE)**

(56) Entgegenhaltungen:
• **NICKEL U: "Overview of generalized monopulse estimation", IEEE AEROSPACE AND ELECTRONIC SYSTEMS MAGAZINE, IEEE SERVICE CENTER, PISCATAWAY, NJ, US, Bd. 20, Nr. 6, 1. Juni 2006 (2006-06-01), Seiten 27-56, XP011244552, ISSN: 0885-8985**

**Beschreibung**

Die Erfindung betrifft ein Verfahren zur Richtungspeilung mittels Monopulsbildung mit einem Radarsystem mit elektronisch gesteuerter Gruppenantenne und analoger Strahlformung von Summen- und Differenzkanälen.

**1. Stand der Technik**

**1a Konventioneller Monopuls**

Elektronisch steuerbare Gruppenantennen ('Phased Array Antennen') bestehen aus der linien- oder flächenhaften Anordnung einer Vielzahl einzelner Antennenelemente mit breitem Öffnungswinkel, die in ihrer Amplituden- und Phasenbelegung individuell einstellbar sind und zusammengefasst ein gebündeltes Antennendiagramm erzeugen [1]. Durch die Phasenbelegung wird die Blickrichtung eingestellt, die Amplitudenbelegung ('Taper') legt die Nebenkeulencharakteristik fest. Üblicherweise werden die Ausgangssignale der Einzelelemente durch Hochfrequenz-Antennenweichen ('Combiner') physikalisch addiert und liefern das Ausgangssignal der Gruppenantenne. Die Summen- und Differenzdiagramme zur Monopulspeilung [1] werden dadurch gebildet, dass die Gesamtapertur hälftig geteilt und die Summensignale der Hälften im sogenannten Monopuls-Combiner in separaten Ausgängen mit gleichem und entgegengesetztem Vorzeichen zusammengefasst werden. Die Amplitudenbelegung ist somit für das Summen- und Differenzdiagramm zwangsläufig identisch.

Aus dem Signal der Summen-Antenne $\Sigma$ und dem der Differenz-Antenne $\Delta$ lässt sich die Monopuls-Diskriminante

$$r = \mathrm{Im}\left\{\frac{\Delta}{\Sigma}\right\} \qquad (1)$$

als Grundlage für die Monopuls-Peilung bilden.

Für den zweidimensionalen Fall wird die Apertur in horizontaler ($x$-) und vertikaler ($y$-) Richtung geteilt, was dann zu den beiden Differenzsignalen $\Delta_x$ und $\Delta_y$ führt, mit denen sich die Monopuls-Diskriminanten

$$r_x = \mathrm{Im}\left\{\frac{\Delta_x}{\Sigma}\right\}$$

$$r_y = \mathrm{Im}\left\{\frac{\Delta_y}{\Sigma}\right\} \qquad (2)$$

für horizontale bzw. vertikale Peilung ergeben.

Unter Annahme von identischen Antennendiagrammen der Aperturhälften bestimmt sich daraus der Peilwert in $u$ - und $v$-Koordinaten in Form der Winkelablagen $\delta u$, $\delta u$ von der Antennenblickrichtung gemäß

$$\delta u = \frac{2}{k_0 d_x} \cdot \arctan(r_x)$$

$$\delta v = \frac{2}{k_0 d_y} \cdot \arctan(r_y) \qquad (3)$$

Mit $k_0 = 2\pi f_0/c_0$ ist dabei die Wellenzahl bei der Radar-Betriebsfrequenz $f_0$ bezeichnet, $d_x$ und $d_y$ sind die Abstände der Phasenzentren der jeweiligen Aperturhälften in horizontaler bzw. vertikaler Richtung.

Die Teilaperturen werden in der Praxis keine identischen Diagramme aufweisen, aber Gleichung 3 stellt eine sehr gute Näherung im Bereich der Hauptkeule des Summendiagramms dar, solange sich eine symmetrische Aufteilung der Aperturen durchführen lässt (z. B. rechteckige, kreisförmige oder elliptische Flächenantennen). Der nutzbare Peilbereich erstreckt sich typischerweise bis zu einem Abfall von ca. 12 dB der Hauptkeule.

Der funktionale Zusammenhang von $\delta u$, $\delta v$ mit $r_x$, $r_y$ wird als Monopuls-Kennline bezeichnet. Für die Bestimmung kleiner Ablagen um die Antennen-Blickrichtung wird diese häufig linearisiert mit den Steilheiten im Nulldurchgang in $u$ - und $v$-Richtung gemäß

$$m_u = \frac{2}{k_0 d_x}$$

$$m_v = \frac{2}{k_0 d_y}$$

$$(4)$$

Die Positionen $x^{(n)}$, $y^{(n)}$ der Phasenzentren der Teilaperturen bestimmen sich anhand einer Schwerpunktbildung über alle Einzelelemente, aus denen sich die jeweilige Aperturhälfte zusammensetzt (mit $n \in \{r,l,o,u\}$ für die rechte, linke, obere und untere Hälfte). Aus den Koordinaten $x^{(n)}_{e,v}$, $y^{(n)}_{e,v}$ und den Amplitudengewichtungen $g^{(n)}_{e,v}$ der Einzelelemente einer Teilapertur berechnen sich die Koordinaten der Phasenzentren zu

$$x^{(n)} = \frac{\sum_v x^{(n)}_{e,v} \cdot g^{(n)}_{e,v}}{\sum_v g^{(n)}_{e,v}}$$

$$y^{(n)} = \frac{\sum_v y^{(n)}_{e,v} \cdot g^{(n)}_{e,v}}{\sum_v g^{(n)}_{e,v}}$$

$$(5)$$

woraus sich schließlich die Abstände der Phasenzentren der horizontalen bzw. vertikalen Aperturhälften ergeben:

$$d_x = x^{(r)} - x^{(l)}$$

$$d_y = y^{(o)} - y^{(u)}$$

$$(6)$$

Somit sind alle Größen bekannt, um aus dem Summen- und den Differenzsignalen einer idealen (fehlerfreien) Gruppenantenne die konventionelle Monopuls-Peilung durchzuführen.

Abweichungen von der idealen Aperturbelegung - insbesondere Symmetriefehler - führen zu Peilfehlern. Deterministische Ursachen solcher Abweichungen sind beispielsweise einzelne ausgefallene Elemente oder ganze Gruppen von Elementen (Zeilen, 'Planks', 'Slats').

Der (systematische) Monopuls-Peilfehler $\{\varepsilon_u, \varepsilon_v\}$ lässt sich ermitteln, indem an beliebigen Positionen $\{u, v\}$ innerhalb des Monopuls-Definitionsbereichs um die Antennen-Blickrichtung $\{u_{ant}, v_{ant}\}$ die Peilung $\{\delta u, \delta v\}$ nach Gleichung 3 berechnet und die Differenz zur tatsächlichen Position in $u$ und $v$ bestimmt wird:

$$\varepsilon_u = u - u_{ant} - \delta u$$

$$\varepsilon_v = v - v_{ant} - \delta v$$

$$(7)$$

Für $\Sigma$, $\Delta_x$ und $\Delta_y$ sind dabei die Werte der entsprechenden Antennendiagramme in Richtung $\{u, v\}$ einzusetzen. Diese sind im rauschfreien Fall mit den Signalen identisch, die die Antenne für eine einfallende Wellenfront aus Richtung $\{u, v\}$ liefert.

Der Gesamtpeilfehler im Betrag beläuft sich auf

$$\varepsilon = \sqrt{\varepsilon_u^2 + \varepsilon_v^2}$$

$$(8)$$

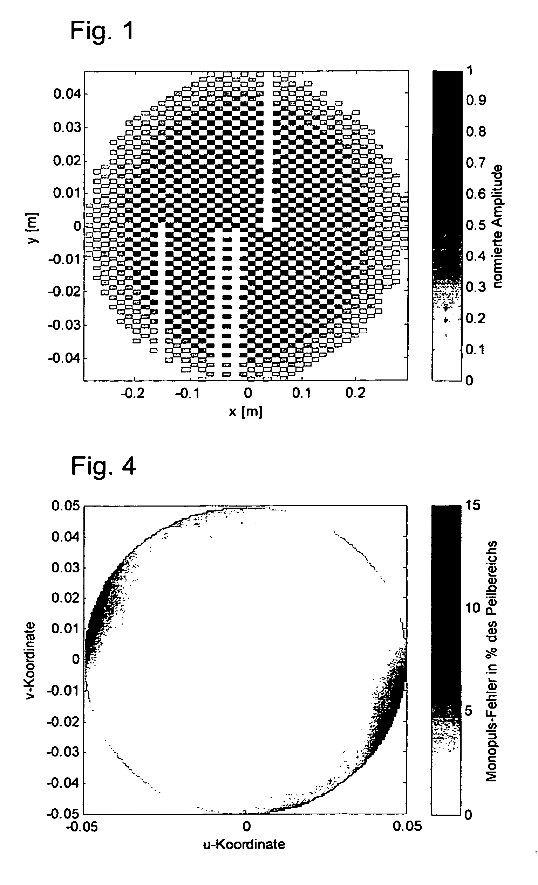

Die Auswirkung von Fehlern auf der Aperturbelegung wird beispielhaft anhand der Simulation einer zweidimensionalen, kreisförmigen Gruppenantenne mit 1000 Elementen im X-Band veranschaulicht, die in einem Dreiecksraster angeordnet sind. Fig. 1 visualisiert Position und Amplituden der Einzelelemente in einem normierten linearen Maßstab. Zur Nebenkeulenreduzierung ist eine Belegung vorgenommen, die zum Rand hin auf -15 dB (ca. 0,2) abfällt. Es sei angenommen, dass die Apertur konstruktiv aus vertikalen Halbzeilen zusammengesetzt ist, von denen vier ausgefallen sind, wodurch Symmetriefehler in horizontaler und vertikaler Richtung entstehen.

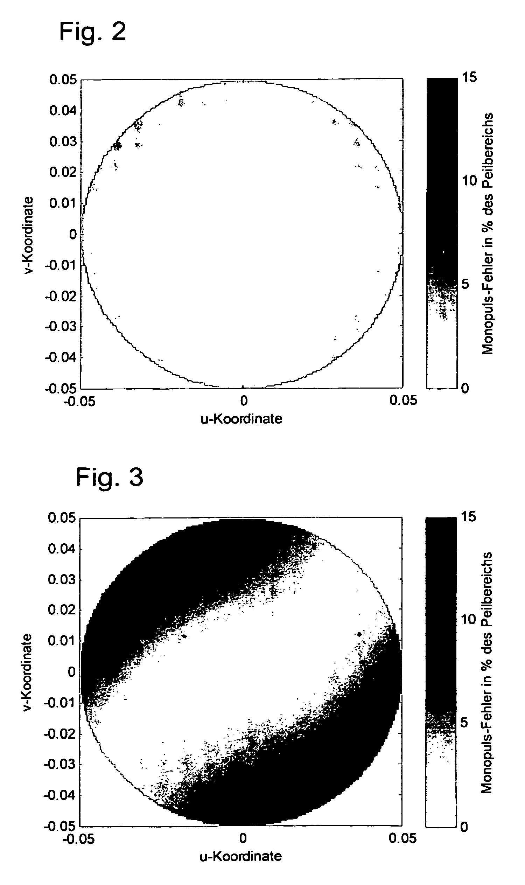

In Fig. 2 und Fig. 3 sind Betragsfehler der Monopuls-Peilung gemäß der Gleichungen 3 bis 8 innerhalb des Peilbereichs in Graustufen kodiert dargestellt. Als Grenze des Peilbereich ist hier der 6 dB-Abfall des Summendiagramms angenommen, der für diese Antenne näherungsweise einen Kreis mit Radius 0,05 um die Blickrichtung (hier: $\{u_{\text{ant}}, v_{\text{ant}}\}$ =$\{0,0\}$) in der $u/v$-Ebene beschreibt. Dieser Bereich umfasst etwa die Hälfte der gesamten Hauptkeulenbreite bzw. das 1,5-fache der 3dB-Keulenweite.

Für die fehlerfreie Aperturbelegung (Fig. 2) sind lediglich am Rand des Bereichs geringe Abweichungen feststellbar. Sie erreichen einen maximalen Wert von 3 % bezogen auf den maximalen Peilwert. Unter Annahme von Aperturfehlern (Fig. 3) steigt der maximale Peilfehler deutlich auf bis zu 15 %.

Zum gegenwärtigen Stand der Technik für Radarsysteme mit elektronisch geschwenkten Gruppenantennen, deren Summen- und Differenzdiagramme analog gebildet sind, werden Peilfehler in gewissen Grenzen toleriert.

**1b Der Verallgemeinerte Monopuls**

Im allgemeinen Fall einer Gruppenantenne werden die Summen- und Differenzdiagramme nicht wie in Abschnitt 1a beschrieben durch hochfrequenzseitige (physikalische, analoge) Kombination gebildet, sondern die Empfangssignale der Einzelelemente liegen zunächst einzeln vor. Nach deren Digitalisierung können dann beliebige Strahlformungen und damit auch die Monopulspeilung digital durchgeführt werden ('digital beam forming', DBF), indem die Elementsignale numerisch mit komplexen Gewichtsfaktoren multipliziert und aufaddiert werden. Dies bedeutet zwar einen erheblich größeren Hardware-Aufwand für die Antenne, es ergeben sich allerdings dadurch viele Freiheitsgrade in der Gestaltung ihrer Eigenschaften. Hinsichtlich der Monopulsberechnung entfällt die Einschränkung, dass Summen-und Differenzdiagramm mit derselben Amplitudenbelegung gebildet werden, so dass hier optimierte Lösungen möglich sind. Auf Basis der Maximum-Likelihood-Schätzung (MLE) finden sich Gewichtsfaktoren zur Formung der Summen- und Differenzdiagramme, in denen auch Abweichungen von der idealisierten Antennenapertur berücksichtigt werden können. Ein Beispiel hierfür sind ausgedünnte ('thinned') Arrays.

Die Algorithmen und verschiedene Aspekte eines solchen Verallgemeinerten Monopuls sind z. B. in [2] beschrieben.

Der Grundgedanke des Verallgemeinerten Monopuls nach [2] besteht darin, aus den Monopulsdiskriminanten $r_{x,y}$ (Gleichung 2) der fehlerbehafteten Antenne mittels einer affinen Abbildung (einfache Verschiebung und lineare Transformation) adaptierte Monopuls-Peilwerte $\delta u_{\text{ad}}$ und $\delta v_{\text{ad}}$ zu bestimmen. Dies ist in Form eines linearen Gleichungssystems beschrieben:

$$\begin{pmatrix} \delta u_{\text{ad}} \\ \delta v_{\text{ad}} \end{pmatrix} = \mathbf{C} \cdot \begin{pmatrix} r_x - \mu_x \\ r_y - \mu_y \end{pmatrix} \quad . \tag{9}$$

Dadurch werden Steilheit ('slope') und Versatz ('bias') der Monopuls-Peilung in Blickrichtung der Antenne an die realen Verhältnisse angepasst.

Die Korrekturterme C und $\mu_{x,y}$ leiten sich aus den Forderungen ab, dass in Blickrichtung

$$\begin{aligned} \delta u_{\text{ad}}\left(u_{\text{ant}}, v_{\text{ant}}\right) &= 0 \\ \delta v_{\text{ad}}\left(u_{\text{ant}}, v_{\text{ant}}\right) &= 0 \end{aligned} \tag{10}$$

gelten muss und für deren partielle Ableitungen (Steigungen)

$$\left(\begin{array}{cc} \dfrac{\partial \delta u_{ad}}{\partial u} & \dfrac{\partial \delta u_{ad}}{\partial v} \\[2ex] \dfrac{\partial \delta v_{\mathrm{ad}}}{\partial u} & \dfrac{\partial \delta v_{\mathrm{ad}}}{\partial v} \end{array}\right)\Bigg|_{(u_{\mathrm{ant}},\, v_{\mathrm{ant}})} = \left(\begin{array}{cc} 1 & 0 \\ 0 & 1 \end{array}\right) \qquad . \qquad\qquad (11)$$

Dieser Ansatz beinhaltet die vereinfachende Annahme einer Linearisierung um den Punkt der Blickrichtung, was dann eine geschlossene Lösung für C und $\mu_{x,y}$ als Funktion der die Antenne beschreibenden Größen ermöglicht. Herleitung und allgemeine Lösung (in Vektorschreibweise) finden sich in [2].

Die Anwendung des Verallgemeinerten Monopuls nach [2] ist jedoch für die Korrektur moderater Aperturfehler nicht geeignet. Insbesondere führt die in seiner Formulierung nach Gleichung 9 vorgenommene Linearisierung für größere Ablagen von der Antennenblickrichtung zu Fehlern, die größer sind als die typischerweise von ausgefallenen Antennenelementen verursachten.

## 2. Aufgabe

Der Erfindung liegt die Aufgabe zugrunde, bei der Anwendung der Monopulspeilung auf eine Gruppenantenne mit analoger Strahlformung von Summen- und Differenzdiagrammen auch bei gestörter Aperturbelegung der Antenne eine Peilung mit hoher Genauigkeit zu erzielen.

## 3. Erfindung

Diese Aufgabe wird mit dem Verfahren nach Anspruch 1 gelöst. Vorteilhafte Ausführungen der Erfindung sind Gegenstand von Unteransprüchen.

Das Konzept des aus dem Stand der Technik bekannten Verallgemeinerten Monopuls wird erfindungsgemäß modifiziert, um auch bei Gruppenantennen mit analoger Strahlformung von Summen- und Differenzkanälen vorbekannte Abweichungen der Aperturbelegung vom idealen Fall bei der Monopulsberechnung zu berücksichtigen.

Vielfach ist im Gesamt-Radarsystem durch zyklisch durchgeführte Selbsttests ('health check', 'built-in tests' z. B. bei jedem Systemstart) bekannt, welche Elemente der Antennen-Empfangsapertur (Einzelelemente oder Planks bzw. Slats) ausgefallen sind. Diese Informationen werden erfindungsgemäß genutzt, um sie zur Berechnung einer fehlerkorrigierten Monopulspeilung zu nutzen.

Darüber hinaus können auch bekannte Amplituden- und Phasenfehler der Empfangselemente in die Korrektur einfließen.

Aber auch konstruktive Abweichungen der Antennenapertur vom Idealfall der symmetrischen Teilbarkeit (beispielsweise zur Realisierung strukturkonformer Antennen) sind von vornherein bekannt und können in der Korrektur berücksichtigt werden.

Mit der Erfindung kann ein verlängerter wartungsfreier Betrieb der Gruppenantenne gewährleistet werden, ohne Abstriche hinsichtlich der Peilgenauigkeit machen zu müssen.

Die Erfindung wird anhand konkreter Ausführungsbeispiele unter Bezugnahme auf Figuren näher erläutert. Es zeigen:

Fig. 1:    Aperturbelegung einer zweidimensionalen Gruppenantenne unter Annahme von vier ausgefallen Halbzeilen,

Fig. 2:    Peilfehler der konventionellen Monopulspeilung für eine fehlerfreie Aperturbelegung,

Fig. 3:    Peilfehler der konventionellen Monopulspeilung bei Symmetriefehlern durch ausgefallene Halbzeilen auf der Apertur,

Fig. 4:    Peilfehler der korrigierten Monopulspeilung bei Symmetriefehlern durch ausgefallene Halbzeilen auf der Apertur.

Gemäß der Erfindung wird die Abbildung zur Bestimmung der adaptierten Monopuls-Peilwerte $\delta u_{corr}$ und $\delta v_{corr}$ aus den Monopulsdiskriminanten $r_{x,y}$ (Gleichung 2) der fehlerbehafteten Antenne mittels folgendem linearem Gleichungssystem beschrieben:

$$\begin{pmatrix} \delta u_{\text{corr}} \\ \delta v_{\text{corr}} \end{pmatrix} = \mathbf{C} \cdot \begin{pmatrix} \arctan(r_x) - \mu_x \\ \arctan(r_y) - \mu_y \end{pmatrix} \quad . \tag{12}$$

Die Berücksichtigung des nichtlinearen Zusammenhangs zwischen der Monopuls-diskriminante und den Peilwerten in Form der Arkustangensfunktion erlaubt im gesamten Peilbereich die Korrektur der Monopulspeilung mit der erforderlichen Genauigkeit.

Für die Bestimmung der Korrekturterme C und $\mu_{x,y}$ im erfindungsgemäßen Fall einer Gruppenantenne mit analoger Strahlformung von Summen- und Differenzkanälen werden folgende Größen benötigt:

- Die Positionen $x_n$ und $y_n$ aller Einzelelemente auf der Apertur relativ zum Zentrum,
- Die tatsächlichen Amplitudengewichte $g_n$ aller Einzelelemente auf der Apertur (für ausgefallene Elemente ist $g_n = 0$ zu setzen, bei bekannten Amplituden- bzw. Phasenfehlern die entsprechende komplexe Amplitude).

Damit resultiert für die Verschiebungs-Korrekturterme $\mu_{x,y}$ in direkt implementierbarer Skalarschreibweise

$$\mu_x = \mathrm{Im}\left\{ \frac{\sum_n g_n^* \cdot \mathrm{sgn}(x_n)}{\sum_n g_n^*} \right\}$$

$$\mu_y = \mathrm{Im}\left\{ \frac{\sum_n g_n^* \cdot \mathrm{sgn}(y_n)}{\sum_n g_n^*} \right\} \quad . \tag{13}$$

Die Matrix der linearen Transformation

$$\mathbf{C} = \mathbf{D}^{-1} = \begin{pmatrix} d_{11} & d_{12} \\ d_{21} & d_{22} \end{pmatrix}^{-1} \tag{14}$$

ergibt sich als Invertierte der 2×2-Matrix D gebildet aus den Elementen

$$d_{11} = \frac{\mathrm{Im}\left\{ jk_0\left( \sum_n g_n^* x_n \operatorname{sgn}(x_n)\cdot \sum_n g_n - \sum_n g_n^* \operatorname{sgn}(x_n)\cdot \sum_n g_n x_n \right)\right\}}{\left|\sum_n g_n\right|^2} - 2\mu_x\cdot \mathrm{Re}\left\{\frac{jk_0\sum_n g_n^* x_n}{\sum_n g_n^*}\right\}$$

$$d_{12} = \frac{\mathrm{Im}\left\{ jk_0\left( \sum_n g_n^* y_n \operatorname{sgn}(x_n)\cdot \sum_n g_n - \sum_n g_n^* \operatorname{sgn}(x_n)\cdot \sum_n g_n y_n \right)\right\}}{\left|\sum_n g_n\right|^2} - 2\mu_x\cdot \mathrm{Re}\left\{\frac{jk_0\sum_n g_n^* y_n}{\sum_n g_n^*}\right\}$$

$$d_{21} = \frac{\mathrm{Im}\left\{ jk_0\left( \sum_n g_n^* x_n \operatorname{sgn}(y_n)\cdot \sum_n g_n - \sum_n g_n^* \operatorname{sgn}(y_n)\cdot \sum_n g_n x_n \right)\right\}}{\left|\sum_n g_n\right|^2} - 2\mu_y\cdot \mathrm{Re}\left\{\frac{jk_0\sum_n g_n^* x_n}{\sum_n g_n^*}\right\}$$

$$d_{22} = \frac{\mathrm{Im}\left\{ jk_0\left( \sum_n g_n^* y_n \operatorname{sgn}(y_n)\cdot \sum_n g_n - \sum_n g_n^* \operatorname{sgn}(y_n)\cdot \sum_n g_n y_n \right)\right\}}{\left|\sum_n g_n\right|^2} - 2\mu_y\cdot \mathrm{Re}\left\{\frac{jk_0\sum_n g_n^* y_n}{\sum_n g_n^*}\right\} \tag{15}$$

Für rein reelle $g_n$, wie sie bei ausgefallenen Elementen sowie beabsichtigten Struktur-Asymmetrien anzunehmen sind, verschwinden die $\mu_{x,y}$, so dass die Korrektur des Versatzes entfällt und sich auch die Berechnung der $d_{ij}$ deutlich vereinfacht zu

$$d_{11} = k_0\frac{\sum g_n x_n \operatorname{sgn}(x_n)\cdot \sum g_n - \sum g_n \operatorname{sgn}(x_n)\cdot \sum g_n x_n}{\left(\sum g_n\right)^2}$$

$$d_{12} = k_0\frac{\sum g_n y_n \operatorname{sgn}(x_n)\cdot \sum g_n - \sum g_n \operatorname{sgn}(x_n)\cdot \sum g_n y_n}{\left(\sum g_n\right)^2}$$

$$d_{21} = k_0\frac{\sum g_n x_n \operatorname{sgn}(y_n)\cdot \sum g_n - \sum g_n \operatorname{sgn}(y_n)\cdot \sum g_n x_n}{\left(\sum g_n\right)^2}$$

$$d_{22} = k_0\frac{\sum g_n y_n \operatorname{sgn}(y_n)\cdot \sum g_n - \sum g_n \operatorname{sgn}(y_n)\cdot \sum g_n y_n}{\left(\sum g_n\right)^2} \tag{16}$$

Im Gegensatz zum konventionellen Monopuls mit den Gleichungen 2, 3, 5 und 6, in dessen Berechnung neben den Positionen die Soll-Amplitudengewichtungen der Antennenelemente eingehen, gehen hier (Gleichungen 2, 9, 13, 14 und 15) die tatsächlichen Gewichte ein.

Für den in Abschnitt 1a beispielhaft betrachteten Fall einer Antenne mit ausgefallenen Halbzeilen sind in Fig. 4 die resultierenden Peilfehler bei Anwendung des erfindungsgemäß korrigierten Monopuls dargestellt. Im Vergleich zum konventionellen Monopuls (Fig. 3) zeigt sich eine deutliche Reduzierung der Maximalfehler.

Für eine quantitative Bewertung des Verbesserungspotenzials der erfindungsgemäßen korrigierten Monopulspeilung sind in nachfolgender Tabelle die Quadratmittelfehler innerhalb des gesamten Peilbereichs vergleichend angegeben. Mit dem korrigierten Monopuls gemäß dieser Erfindung lassen sich demnach für die betrachtete Antenne selbst beim Ausfall von vier Halbzeilen nur unwesentlich verschlechterte Peilungen gegenüber dem Idealzustand erreichen.

Kleine Fehler wie beispielsweise einzelne ausgefallene Elemente werden praktisch vollständig korrigiert.

| Aperturzustand | Monopuls-Verfahren | Peilfeh-ler |
|---|---|---|
| ideal | konventioneller Mono-puls | 1,8% rms |
| 4 Planks ausgefal-len | konventioneller Mono-puls | 6,6% rms |
| 4 Planks ausgefal-len | Korrigierter Monopuls | 2,2% rms |

Der zusätzliche Aufwand für die korrigierte Monopulspeilung beschränkt sich im Wesentlichen auf die Berechnung der Korrekturterme C und $\mu_{x,y}$ (bei reellen $g_n$ nur C), die aber nur einmal zur Adaption an die gegebenen nichtidealen Antenneneigenschaften durchgeführt werden muss bzw. wenn sich diese ändern (z. B. nach dem Start des Systems mit Selbsttest zur Identifikation ausgefallener Elemente). Der eigentliche Korrekturvorgang im operationellen Betrieb besteht lediglich aus Anwendung von Gleichung 12, was einen nur minimalen Mehraufwand im Vergleich zum konventionellen Monopuls (Gleichung 3) bedeutet.

**In der Beschreibungseinleitung zitierter Stand der Technik**

Merill Skolnik: Radar Handbook, 2nd edition; McGraw-Hill Book Company, Singapore, 1980

Ulrich Nickel: Overview of Generalized Monopulse Estimation; IEEE A&E Systems Magazine, Vol. 21, No. 6, June 2006, Part 2: Tutorials, pp. 27-56

**Patentansprüche**

**1.**   Verfahren zur Richtungspeilung mittels Monopulsbildung an einem Radarsystem mit elektronisch gesteuerter Gruppenantenne und analoger Strahlformung von Summen- und Differenzkanälen, **dadurch gekennzeichnet, dass** ein Selbsttest der Antenne zur Identifikation ausgefallener Empfangselemente durchgeführt wird, und das Resultat des Selbsttests direkt in die Monopulsbildung eingeht und dieser dadurch fehlerkorriert wird, wobei das Resultat des Selbsttests in Korrekturwerte in Form einer linearen Transformationsmatrix C und Verschiebungskorrekturtermen $\mu_x$, $\mu_y$ umgerechnet wird, welche, unabhängig von der Blickrichtung der Antenne, mit den aus dem Summenkanalsignal $\Sigma$ und den Differenzkanalsignalen $\Delta_x$, $\Delta_y$ der Antenne wie folgt verknüpft werden:

$$\begin{pmatrix} \delta u_{\text{corr}} \\ \delta v_{\text{corr}} \end{pmatrix} = \mathbf{C} \cdot \begin{pmatrix} \arctan\left( \text{Im}\left\{ \dfrac{\Delta_x}{\Sigma} \right\} \right) - \mu_x \\ \arctan\left( \text{Im}\left\{ \dfrac{\Delta_y}{\Sigma} \right\} \right) - \mu_y \end{pmatrix},$$

wobei $\delta u_{\text{corr}}$ und $\delta v_{\text{corr}}$ die korrigierten Peilwerte, definiert als Winkelablagen von der Antennenblickrichtung, sind, wobei in die Berechnung der Korrekturwerte C, $\mu_x$, $\mu_y$ folgende Parameter der Gruppenantenne:

- die Positionen $x_n$, $y_n$ der Empfangselemente auf der Antennenapertur relativ zu deren Zentrum,
- die tatsächlichen Amplitudengewichte $g_n$ der Empfangselemente auf der Apertur

gemäß den folgenden Zusammenhängen eingehen:

$$\mu_x = \mathrm{Im}\left\{\frac{\sum_n \overset{*}{g_n}\cdot \mathrm{sgn}(x_n)}{\sum_n \overset{*}{g_n}}\right\},$$

$$\mu_y = \mathrm{Im}\left\{\frac{\sum_n \overset{*}{g_n}\cdot \mathrm{sgn}(y_n)}{\sum_n \overset{*}{g_n}}\right\}$$

$$\mathbf{C} = \mathbf{D}^{-1} = \begin{pmatrix} d_{11} & d_{12} \\ d_{21} & d_{22} \end{pmatrix}^{-1}$$

mit

$$d_{11} = \frac{\mathrm{Im}\left\{\mathrm{j}k_0\left(\sum_n \overset{*}{g_n}x_n\,\mathrm{sgn}(x_n)\cdot\sum_n g_n - \sum_n \overset{*}{g_n}\,\mathrm{sgn}(x_n)\cdot\sum_n g_n x_n\right)\right\}}{\left|\sum_n g_n\right|^2} - 2\mu_x\cdot\mathrm{Re}\left\{\frac{\mathrm{j}k_0\sum_n \overset{*}{g_n}x_n}{\sum_n \overset{*}{g_n}}\right\}$$

$$d_{12} = \frac{\mathrm{Im}\left\{\mathrm{j}k_0\left(\sum_n \overset{*}{g_n}y_n\,\mathrm{sgn}(x_n)\cdot\sum_n g_n - \sum_n \overset{*}{g_n}\,\mathrm{sgn}(x_n)\cdot\sum_n g_n y_n\right)\right\}}{\left|\sum_n g_n\right|^2} - 2\mu_x\cdot\mathrm{Re}\left\{\frac{\mathrm{j}k_0\sum_n \overset{*}{g_n}y_n}{\sum_n \overset{*}{g_n}}\right\}$$

$$d_{21} = \frac{\mathrm{Im}\left\{\mathrm{j}k_0\left(\sum_n \overset{*}{g_n}x_n\,\mathrm{sgn}(y_n)\cdot\sum_n g_n - \sum_n \overset{*}{g_n}\,\mathrm{sgn}(y_n)\cdot\sum_n g_n x_n\right)\right\}}{\left|\sum_n g_n\right|^2} - 2\mu_y\cdot\mathrm{Re}\left\{\frac{\mathrm{j}k_0\sum_n \overset{*}{g_n}x_n}{\sum_n \overset{*}{g_n}}\right\}$$

$$d_{22} = \frac{\mathrm{Im}\left\{\mathrm{j}k_0\left(\sum_n \overset{*}{g_n}y_n\,\mathrm{sgn}(y_n)\cdot\sum_n g_n - \sum_n \overset{*}{g_n}\,\mathrm{sgn}(y_n)\cdot\sum_n g_n y_n\right)\right\}}{\left|\sum_n g_n\right|^2} - 2\mu_y\cdot\mathrm{Re}\left\{\frac{\mathrm{j}k_0\sum_n \overset{*}{g_n}y_n}{\sum_n \overset{*}{g_n}}\right\}$$

2. Verfahren nach Anspruch 1, **dadurch gekennzeichnet, dass** neben den im Rahmen des Selbsttests identifizierten ausgefallenen Empfangselemente auch bekannte Amplituden- und Phasenfehler der Empfangselemente oder konstruktive Abweichungen der Antennenapertur vom Idealfall einer symmetrischen Teilbarkeit in die die Monopulsbildung eingehen.

**Claims**

1. Method for direction finding by means of monopulse formation in a radar system with electronically controlled group antenna and analog beam shaping of sum and difference channels, **characterized in that** a self test of the antenna is carried out to identify failed receiving elements; and the result of the self test goes directly into the monopulse formation and said test is thereby error corrected, the result of the self test being converted into correction values in the form of a linear transformation matrix C and displacement correction terms $\mu_x$ and $\mu_y$ that, independently of the antenna viewing direction, are combined as follows with those from the sum channel signals and the difference channel signals $\Delta_x$, $\Delta_y$ of the antenna:

$$\begin{pmatrix} \delta u_{\text{corr}} \\ \delta v_{\text{corr}} \end{pmatrix} = \mathbf{C} \cdot \begin{pmatrix} \arctan\left( \text{Im}\left\{ \dfrac{\Delta_x}{\Sigma} \right\} \right) - \mu_x \\ \arctan\left( \text{Im}\left\{ \dfrac{\Delta_y}{\Sigma} \right\} \right) - \mu_y \end{pmatrix},$$

$\delta u_{\text{corr}}$ and $\delta v_{\text{corr}}$ being the corrected bearing values defined as angular offsets of the antenna viewing direction, the following parameters of the group antenna featuring in the calculation of the correction values C, $\mu_x$, $\mu_y$ :

- the positions $x_n$, $y_n$ of the receiving elements on the antenna aperture relative to the center thereof, and
- the actual amplitude weightings $g_n$ of the receiving elements on the aperture in accordance with the following relationships:

$$\mu_x = \text{Im}\left\{ \frac{\sum_n \dot{g_n} \cdot \text{sgn}(x_n)}{\sum_n \dot{g_n}} \right\},$$

$$\mu_y = \text{Im}\left\{ \frac{\sum_n \dot{g_n} \cdot \text{sgn}(y_n)}{\sum_n \dot{g_n}} \right\}$$

$$\mathbf{C} = \mathbf{D}^{-1} = \begin{pmatrix} d_{11} & d_{12} \\ d_{21} & d_{22} \end{pmatrix}^{-1}.$$

with

$$d_{11} = \frac{\text{Im}\left\{ jk_0 \left( \sum_n \dot{g_n} x_n \, \text{sgn}(x_n) \cdot \sum_n \dot{g_n} - \sum_n \dot{g_n} \, \text{sgn}(x_n) \cdot \sum_n \dot{g_n} x_n \right) \right\}}{\left| \sum_n \dot{g_n} \right|^2} - 2\mu_x \cdot \text{Re}\left\{ \frac{jk_0 \sum_n \dot{g_n} x_n}{\sum_n \dot{g_n}} \right\}$$

$$d_{12} = \frac{\mathrm{Im}\left\{ jk_0\left( \sum_n \dot{g}_n y_n \,\mathrm{sgn}(x_n)\cdot \sum_n g_n - \sum_n \dot{g}_n \,\mathrm{sgn}(x_n)\cdot \sum_n g_n y_n \right) \right\}}{\left| \sum_n g_n \right|^2} - 2\mu_x \cdot \mathrm{Re}\left\{ \frac{jk_0 \sum_n \dot{g}_n y_n}{\sum_n \dot{g}_n} \right\}$$

$$d_{21} = \frac{\mathrm{Im}\left\{ jk_0\left( \sum_n \dot{g}_n x_n \,\mathrm{sgn}(y_n)\cdot \sum_n g_n - \sum_n \dot{g}_n \,\mathrm{sgn}(y_n)\cdot \sum_n g_n x_n \right) \right\}}{\left| \sum_n g_n \right|^2} - 2\mu_y \cdot \mathrm{Re}\left\{ \frac{jk_0 \sum_n \dot{g}_n x_n}{\sum_n \dot{g}_n} \right\}$$

$$d_{22} = \frac{\mathrm{Im}\left\{ jk_0\left( \sum_n \dot{g}_n y_n \,\mathrm{sgn}(y_n)\cdot \sum_n g_n - \sum_n \dot{g}_n \,\mathrm{sgn}(y_n)\cdot \sum_n g_n y_n \right) \right\}}{\left| \sum_n g_n \right|^2} - 2\mu_y \cdot \mathrm{Re}\left\{ \frac{jk_0 \sum_n \dot{g}_n y_n}{\sum_n \dot{g}_n} \right\}$$

2. Method according to Claim 1, **characterized in that**, in addition to the failed receiving elements identified in the course of the self test, known amplitude and phase errors of the receiving elements, or structural deviations of the antenna aperture from the ideal case of a symmetrical divisibility, also feature in the monopulse formation.

**Revendications**

1. Procédé de détermination de direction par formation de mono-impulsions dans un système radar comportant une antenne réseau commandée électroniquement et par formation analogique de faisceau de canaux de somme et de différence, **caractérisé en ce qu'**un autotest de l'antenne est effectué afin d'identifier des éléments de réception défectueux, et **en ce que** le résultat de l'autotest est directement utilisé dans la formation de mono-impulsions pour ainsi corriger les erreurs affectant celui-ci, dans lequel le résultat de l'autotest est converti en des valeurs de correction sous la forme d'une matrice de transformation linéaire C et de termes de correction de décalage $\mu_x$, $\mu_y$, qui, indépendamment de la direction de pointage de l'antenne, sont combinés avec celles du signal du canal de somme $\Sigma$ et des signaux des canaux de différence $\Delta_x$, $\Delta_y$ de l'antenne de la façon suivante :

$$\begin{pmatrix} \delta u_{corr} \\ \delta v_{corr} \end{pmatrix} = C \cdot \begin{bmatrix} \arctan\left( \mathrm{Im}\left\{ \frac{\Delta_x}{\Sigma} \right\} \right) - \mu_x \\ \arctan\left( \mathrm{Im}\left\{ \frac{\Delta_y}{\Sigma} \right\} \right) - \mu_y \end{bmatrix},$$

où $\delta u_{corr}$ et $\delta v_{corr}$ sont les valeurs de direction corrigées, définies comme étant des positions angulaires de la direction de pointage de l'antenne, dans lequel les paramètres suivants de l'antenne réseau sont utilisés dans le calcul des valeurs de correction C, $\mu_x$, $\mu_y$ :

- les positions $x_n$, $y_n$ des éléments de réception sur l'ouverture d'antenne par rapport à son centre,
- les poids d'amplitude effectifs $g_n$ des éléments de réception sur l'ouverture,

conformément aux relations suivantes :

11

$$\mu_x = \mathrm{Im}\left\{\frac{\sum_n g_n^* \cdot \mathrm{sgn}(x_n)}{\sum_n g_n^*}\right\}$$

,

$$\mu_y = \mathrm{Im}\left\{\frac{\sum_n g_n^* \cdot \mathrm{sgn}(y_n)}{\sum_n g_n^*}\right\}$$

$$\mathbf{C} = \mathbf{D}^{-1} = \begin{pmatrix} d_{11} & d_{12} \\ d_{21} & d_{22} \end{pmatrix}^{-1}$$

avec

$$d_{11} = \frac{\mathrm{Im}\{jk_0(\sum_n g_n^* x_n \mathrm{sgn}(x_n) \cdot \sum_n g_n - \sum_n g_n^* \mathrm{sgn}(x_n) \cdot \sum_n g_n x_n)\}}{|\sum_n g_n|^2} - 2\mu_x \cdot \mathrm{Re}\left\{\frac{jk_0 \sum_n g_n^* x_n}{\sum_n g_n^*}\right\}$$

$$d_{12} = \frac{\mathrm{Im}\{jk_0(\sum_n g_n^* y_n \mathrm{sgn}(x_n) \cdot \sum_n g_n - \sum_n g_n^* \mathrm{sgn}(x_n) \cdot \sum_n g_n y_n)\}}{|\sum_n g_n|^2} - 2\mu_x \cdot \mathrm{Re}\left\{\frac{jk_0 \sum_n g_n^* y_n}{\sum_n g_n^*}\right\}$$

$$d_{21} = \frac{\mathrm{Im}\{jk_0(\sum_n g_n^* x_n \mathrm{sgn}(y_n) \cdot \sum_n g_n - \sum_n g_n^* \mathrm{sgn}(y_n) \cdot \sum_n g_n x_n)\}}{|\sum_n g_n|^2} - 2\mu_y \cdot \mathrm{Re}\left\{\frac{jk_0 \sum_n g_n^* x_n}{\sum_n g_n^*}\right\}$$

$$d_{22} = \frac{\mathrm{Im}\{jk_0(\sum_n g_n^* y_n \mathrm{sgn}(y_n) \cdot \sum_n g_n - \sum_n g_n^* \mathrm{sgn}(y_n) \cdot \sum_n g_n y_n)\}}{|\sum_n g_n|^2} - 2\mu_y \cdot \mathrm{Re}\left\{\frac{jk_0 \sum_n g_n^* y_n}{\sum_n g_n^*}\right\}$$

2. Procédé selon la revendication 1, **caractérisé en ce qu'**outre les éléments de réception défectueux identifiés dans le cadre de l'autotest, des erreurs d'amplitude et de phase connues des éléments de réception ou des écarts structurels connus de l'ouverture d'antenne par rapport à un cas idéal d'une divisibilité symétrique, sont également utilisés lors de la formation de mono-impulsions.

## Fig. 1

## Fig. 4

## Fig. 2

## Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MERILL SKOLNIK.** Radar Handbook. McGraw-Hill, 1980
- **ULRICH NICKEL.** Overview of Generalized Monopulse Estimation. *IEEE A&E Systems Magazine,* Juni 2006, vol. 21 (6), 27-56